# EUROPEAN PATENT APPLICATION

(11) **EP 2 037 384 A1**
(43) Date of publication of application: **18.03.2009**
(21) Application number: 08014248.2
(22) Date of filing: 08.08.2008
(51) Int. Cl.: G06F 21/00

(54) **Method and apparatus for preventing web page attacks**

(30) Priority: 05.09.2007 US 850036
(71) Applicant: Lionic Corporation, Hsinchu City 30078 (TW)
(72) Inventor: Chien, Shih- Wei, Hsinchu City (TW)
(74) Representative: Hager, Thomas Johannes

(57) **Abstract**

A method and apparatus for preventing web page attacks are disclosed. Specifically, one embodiment of the present invention sets forth a method, which includes the steps of examining an object property from a web page requested by a client computer in real-time before the client computer receives the web page, assessing a collective risk level associated with the web page causing harm to the client computer based on the result of examining the object property, and performing an action with regards to the web page according to the collective risk level.

## Description

### BACKGROUND OF THE INVENTION

### Field of the Invention

The present invention relates to computer security technologies, especially a method and apparatus for preventing web page attacks.

### Description of the Related Art

Malware is a software or program code designed to infiltrate or damage a client computer without user consent. It includes computer viruses, worms, trojan horses, spyware, dishonest adware, and other malicious and unwanted software. Typically, malware disrupts the operations of the client computer by seizing the resources of the client computer and often rendering the client computer unusable. However, even after the installation of anti-virus software or various operating system security patches on the client computer, the client computer is still subject to another form of attack, commonly referred to as webpage attack or code injection. Specifically, certain malicious codes are embedded into a web page that the client computer accesses through a network. This web page is not only limited to a page on a hostile website, such as, a crack and serial no. site, a porn site, and a site particularly designed for malicious attacks, but also a page on a commonly visited website, such as a popular merchant's website, an Internet portal, an Internet blog, and a popular download website.

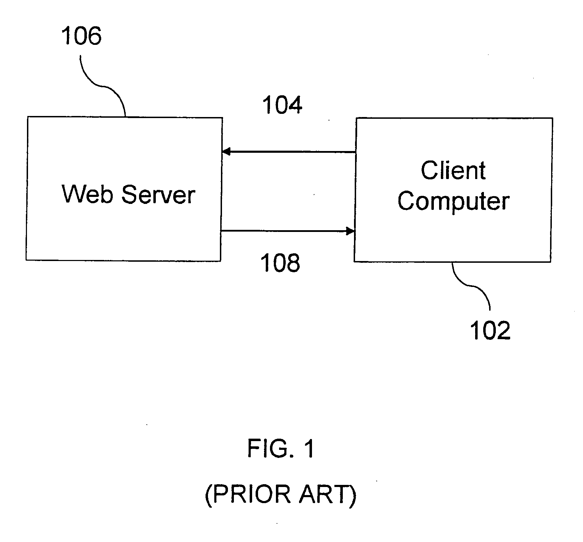

FIG. 1 illustrates one scenario in which the security of a client computer is breached by an unknowing user of the client computer browsing the Internet. Typically, the web pages for a web site on the Internet are stored in a web server, such as a web server 106 shown in FIG. 1. When a user of a client computer 102 browses the Internet and accesses this web site, the client computer 102 sends a request for a web page 104 from the web server 106. The requested web page may be modified to become a modified web page 108 that contains malicious codes. So, in this scenario, in response to the request 104, the web server 106 sends the modified web page 108 back to the client computer 102. Once the client computer 102 receives the modified web page 108, the malicious codes in the modified web page 108 can damage the client computer 102. The user of the client computer 102 most likely does not know about this security breach, since the effects of the malicious codes may not be immediately felt.

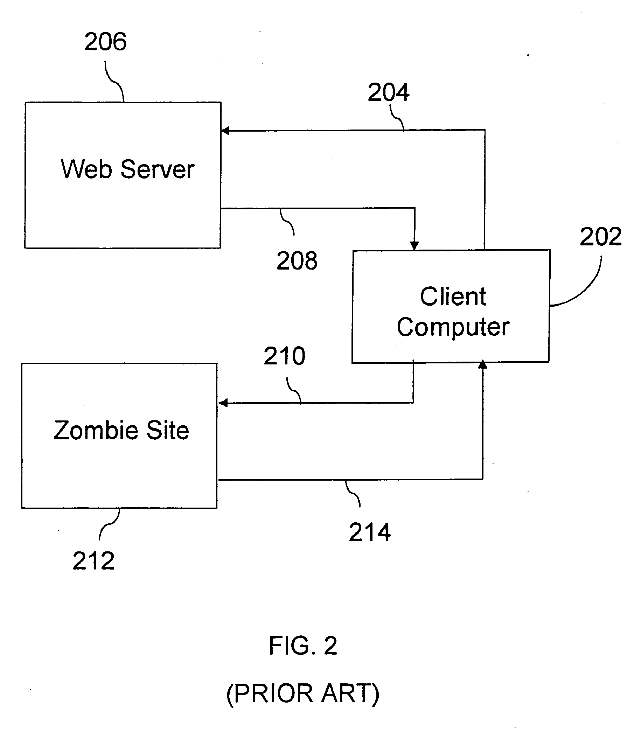

FIG. 2 illustrates another scenario in which the security of the client computer is also breached by the unknowing user browsing the Internet. Similar to the scenario illustrated in FIG. 1, when a client computer 202 sends a request for a web page 204, a web server 206 sends back a modified web page 208 back to the client computer 202. However, instead of malicious codes, the modified web page 208 includes an embedded link that loads a web page or a hostile program from a zombie site 212 onto the client computer 202 without the knowledge of the user. Then a malicious program or script 214 from this or even another zombie site infects or damages the client computer 202. As a result of these two different types of security breaches, in some instances, the client computer 202 may suffer irreversible system failures and crashes.

Traditional desktop anti-virus software is unable to effectively prevent the aforementioned web injections from occurring, because it generally operates on data that is already resident in a client computer. Specifically, the desktop anti-virus software compares the content heuristics of the memory (e.g., its Random Access Memory and boot sectors) and also the files stored on fixed or removable drives (e.g., hard drives and floppy drives) of the client computer against a database of known virus signatures. With this approach, the client computer still has no way of knowing in advance whether the web page it requests for has been modified and thus has no way of preventing the receipt of such a modified web page. Instead, the desktop anti-virus software necessarily waits until after the web page attack takes place before it initiates a scan, which may or may not be able to identify and address the security breach caused by the web page attack.

As the foregoing illustrates, convention approaches are unable to prevent web page attacks or code injections; thus, what is needed is an effective method and system to detect and address such intrusions before a client computer receives its requested web pages.

### SUMMARY OF THE INVENTION

A method and apparatus for preventing web page attacks are disclosed. Specifically, one embodiment of the present invention sets forth a method, which includes the steps of examining an object property from a web page requested by a client computer in real-time before the client computer receives the web page, assessing a collective risk level associated with the web page causing harm to the client computer based on the result of examining the object property, and performing an action with regards to the web page according to the collective risk level.

One advantage of the disclosed method and apparatus is to prevent a web page containing malicious codes from reaching a client computer, so that the client computer is not burdened with identifying and removing the malicious codes after the receipt of the web page.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 illustrates one scenario in which the security of a client computer is breached by an unknowing user of the client computer browsing the Internet;

FIG. 2 illustrates another scenario in which the security of the client computer is also breached by the unknowing user browsing the Internet;

FIG. 3 illustrates a system configuration, in which a modified web page is intercepted prior to reaching a client computer, according to one embodiment of the present invention;

FIG. 4 is a simplified block diagram of a web page analyzer, according to one embodiment of the present invention;

FIG. 5 is a flow chart illustrating a process that a web page analyzer follows, according to one embodiment of the present invention;

FIG. 6 illustrates a snapshot of some objects in the source code of a web page;

FIG. 7 illustrates an example of the known signature database;

FIG. 8 is a simplified block diagram of a network device with a web page analyzer, according to one embodiment of the present invention; and

FIG. 9 is also a simplified block diagram of another network device with a web page analyzer, according to another embodiment of the present invention.

### DETAILED DESCRIPTION

Throughout this disclosure, various terms relating to the Internet and network related technologies are used, such as Hypertext Markup Language ("HTML"), Hypertext Transfer Protocol ("HTTP"), Uniform Resource Locator ("URL"), Transmission Control Protocol (TCP)/Internet Protocol (IP), and Network Address Translation ("NAT"). One embodiment of the present invention is implemented as a program product for use with a network device. The program(s) of the program product defines functions of the embodiments (including the methods described herein) and can be contained on a variety of machine-readable storage media. Illustrative machine-readable storage media include, but are not limited to: (i) non-writable storage media (e.g., CD-ROM disks readable by a CD-ROM drive, DVD disks readable by a DVD drive, or read-only memory devices within a network device such as Read Only Memory chips or any type of solid-state non-volatile semiconductor memory) on which information is permanently stored; (ii) writable storage media (e.g., flash memory or any type of solid-state random-access semiconductor memory) on which alterable information is stored. Such machine-readable storage media, when carrying machine-readable instructions that direct the functions of the present invention, are embodiments of the present invention. Other media include communications media through which information is conveyed to a network device, such as through a computer or telephone network, including wireless communications networks. The latter embodiment specifically includes transmitting information to/from the Internet and other networks. Such communications media, when carrying machine-readable instructions that direct the functions of the present invention, are embodiments of the present invention.

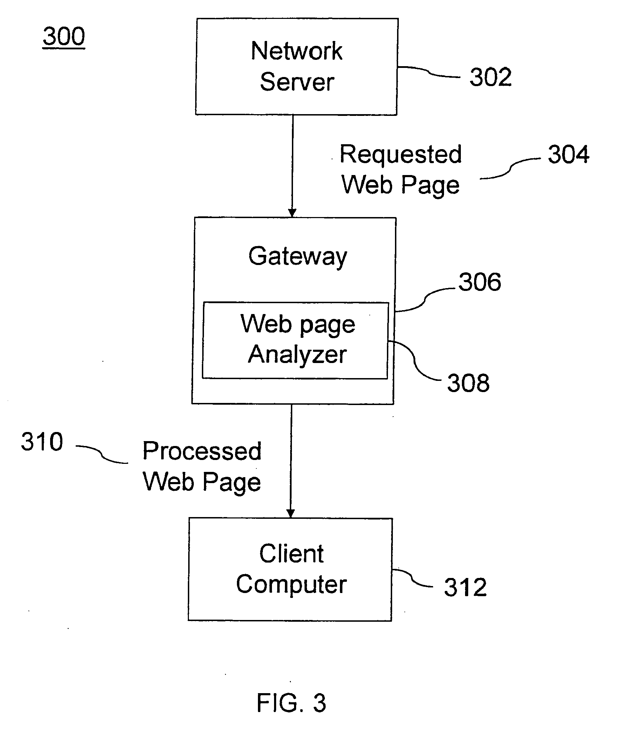

FIG. 3 illustrates a system configuration, in which a modified web page is intercepted prior to reaching a client computer, according to one embodiment of the present invention. As shown, a system 300 comprises of a network server 302, a gateway 306, and a client computer 312. Here, when the network server 302 sends a requested web page destined for a client computer 312, the web page may already been modified to contain malicious codes. Before this requested web page 304 reaches the client computer 312, however, the gateway 306 acts as a protective shield to intercept the page. Specifically, in one implementation, the gateway 306 includes a web page analyzer 308, which performs a real-time security scan of the requested web page 304. In one implementation, the security scan examines the source code of the requested web page 304. If malicious codes are found in the requested web page 304, the web page analyzer 308 either removes or isolates the malicious codes and sends a processed web page 310 to the client computer 312. In another implementation, the web page analyzer 308 also acts as a host filter to block the client computer 312 from accessing previously blacklisted websites, such as a zombie site. In yet another implementation, the web page analyzer 308 checks the content that is supposed to be downloaded to the client computer 312 for malware. Subsequent paragraphs will further detail the web page analyzer 308.

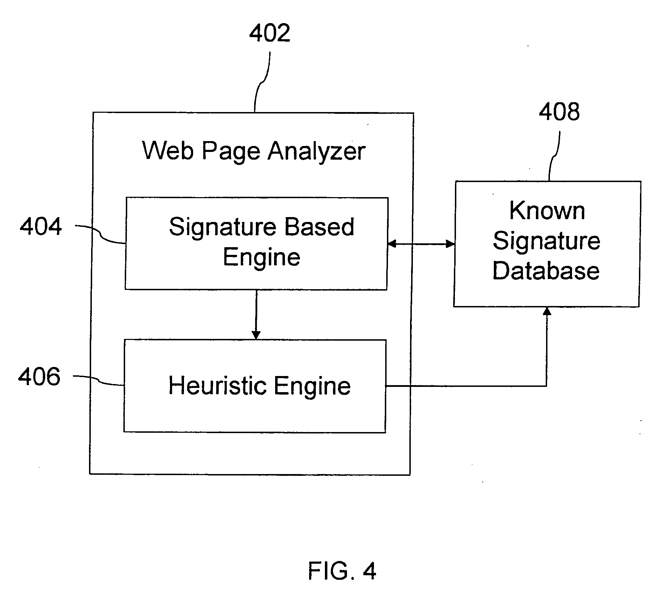

FIG. 4 is a simplified block diagram of a web page analyzer 402, according to one embodiment of the present invention. The web page analyzer 402 includes a signature based engine 404, a heuristic engine 406, and a known signature database 408. When the web page analyzer 402 receives a requested web page, the signature based engine 404 examines the source code of the requested web page. The source code may contain multiple objects, each of which is associated with certain object properties. In one implementation, the signature based engine 404 parses these objects from the source code and compares their associated object properties with the known attack signatures stored in the known signature database 408. So, if a match is found in the known signature database 408, then the requested web page is considered to contain malicious codes. On the other hand, if no match is found, the requested web page is further processed by the heuristic engine 406. Subsequent paragraphs will provide examples of objects and object properties in a web page.

One aspect of the heuristic engine 406 is to detect and decipher anomaly in the requested web page. An anomaly here broadly refers to an object property which deviates from the expected attributes for such an object property. In one implementation, the heuristic engine 406 employs a scoring system, in which a numerical score is assigned to each object property. The numerical score is representative of the risk level for the object property. Thus, the heuristic engine 406 assigns a high score to an object property that is associated with a potentially malicious anomaly, a lower score to an object property that is associated with a potentially benign anomaly, and an even lower score to an object property that is not associated with any anomaly at all. The following table illustrates some anomalies that the heuristic engine 406 is able to detect and assign scores to:

| **Anomalies** | **Expected Attributes** | **Score** |
|---|---|---|
| 7-bit content encoding with 8-bit texts | Same number of bits to represent encoded content and texts | 20 |
| Texts after </HTML> tag | No texts after an end tag | 15 |
| An unusual number of frames in a single web page | A reasonable number of frames in a single web page | 5 |
| A hidden Iframe that links to a different host | A hidden Iframe typically links to the same host as the current web page | 10 |
| Script that loads an executable file automatically | Script is used to load dynamic content | 90 |

In one implementation, the heuristic engine 406 aggregates these scores for the object properties for each web page to represent a collective risk level for the web page. It should be noted that the heuristic engine 406 may weigh each score differently and apply varying weights in the aggregation. Then, the heuristic engine 406 compares the aggregated score to an adjustable threshold for each web page. If the aggregated score exceeds the adjustable threshold, then the web page is deemed malicious and the scanning of the source code of the web page terminates. In addition, after exceeding the adjustable threshold, the location of this currently processed web page is blacklisted in the known signature database 408. Alternatively, the anomaly or the combinations of the anomalies that contribute to the aggregated score are blacklisted. It should be noted that the scoring system and the adjustable threshold are adaptive to changing circumstances. For instance, suppose a particular type of an anomaly is assumed to be of high risk and thus is initially assigned a high score. However, through field testing, suppose this anomaly is later found to be benign or less risky than other anomalies. Then, the score can be adjusted to reflect this changed circumstance. Similarly, the threshold can be adjusted, if the heuristic engine 406 wrongly labels too many web pages to be malicious.

As discussed above, the known signature database 408 stores signatures of known attacks. In one implementation, the properties associated with each signature are categorized in the database. Subsequent paragraphs will provide some examples. The known signature database 408 can be generated and maintained by the developer of the web page analyzer 402 or by some other third parties. Also, one implementation of the known signature database 408 resides in the web page analyzer 402 (not shown in FIG. 4). Alternatively, the known signature database 408 resides in a network server, with which the web page analyzer 402 maintains a link.

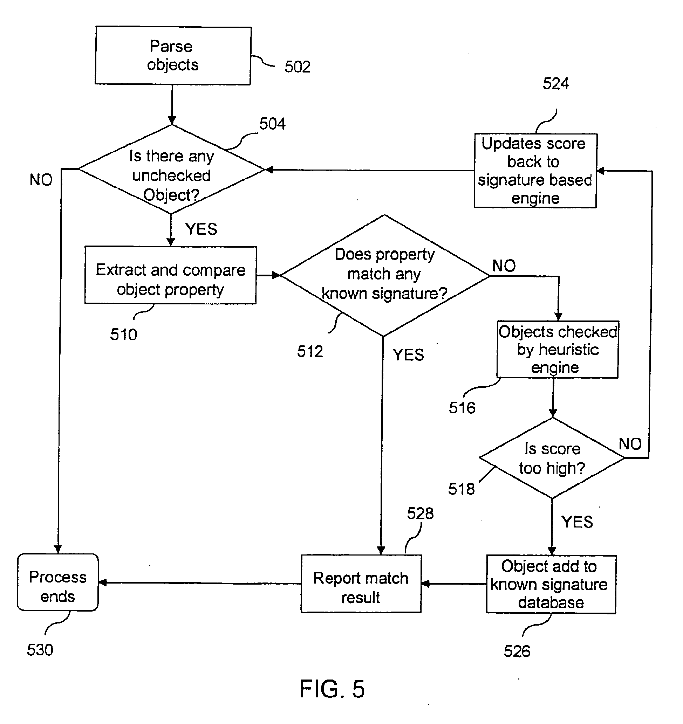

FIG. 5 is a flow chart illustrating a process that the web page analyzer 402 follows, according to one embodiment of the present invention. Suppose a client computer C requests for a web page *W*, and the web page analyzer 402 receives a web page *W.* In conjunction with FIG. 4, in step 502, the signature based engine 404 parses out the objects from the source code of the web page *W* and tracks which object is examined. If every object associated with the web page *W* has been examined as indicated by step 504, then the scanning process ends in step 530. On the other hand, if there are remaining objects to be checked, then the signature based engine 404 extracts the object properties associated with one of the remaining-to-be-checked objects and compares the objects properties to the blacklisted signatures in the known signature database 408 in step 510. If the signature based engine 404 finds a match in step 512, then it reports the result to the web page analyzer 402 in step 528. In one implementation, in response to receiving the report, the web page analyzer 402 initiates a cleaning process to attempt to remove the malicious codes before the web page W reaches the client computer *C.* If no match is found as indicated in step 512, then the signature based engine 404 sends the object and the extracted object properties to the heuristic engine 406.

The heuristic engine 406 checks the object and its associated object properties in step 516. As discussed above, the heuristic engine 406 assigns numerical scores to the object properties and also tracks an aggregated score for the web page *W.* Then the heuristic engine 406 compares the aggregated score to an adjustable threshold in step 518. If the score is too high, i.e., exceeding the adjustable threshold, then the heuristic engine 406 updates the known signature database 408 with the location of currently processed web page. Alternatively, the heuristic engine 406 stores the anomaly or the combinations of the anomalies that contribute to the aggregated score in the known signature database 408. Otherwise, the heuristic engine 408 updates the aggregated score in step 524 by including the scores for the latest extracted object properties. It should again be noted that the scores of the object properties may be weighed differently before the aggregation. Then, the signature based engine 404 continues to operate on the unchecked objects in step 504.

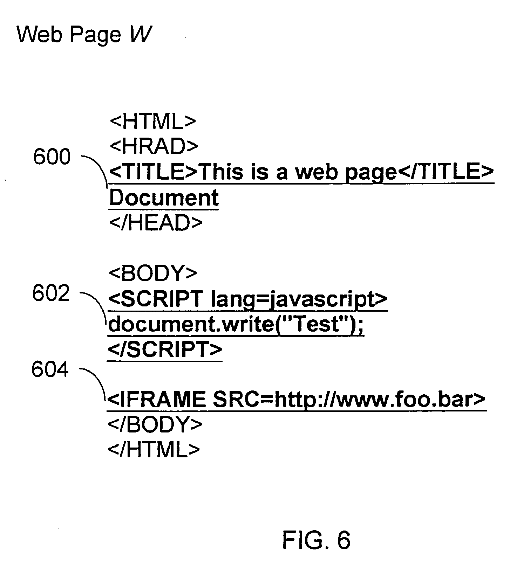

To continue with the example discussed, FIG. 6 illustrates a snapshot of some objects in the source code of the web page W Suppose the HTML language is used for the web page *W*. Objects 600, 602, and 604 are highlighted, bolded, and underlined in FIG. 6. For the object 604, <IFRAME SRC=http://www.foo.bar>, IFRAME and SRC are object properties for this object. IFRAME is an HTML element, which enables the embedding of another HTML document inside the main document. The URL of this HTML document to be embedded, http://www.foo.bar, is specified by the SRC.

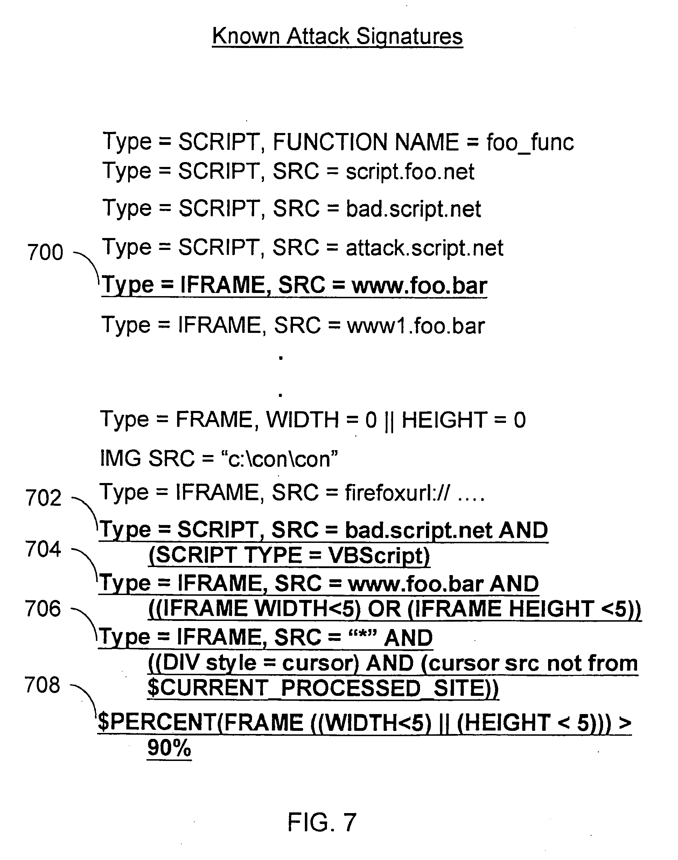

FIG. 7 illustrates an example of the known signature database. Each line shown in FIG. 7 represents a known attack signature with different object properties. Each of these blacklisted signatures is further grouped in different categories. In this example, some of the signatures are categorized using the "Type" information, and many of the illustrated signatures include two or more object properties, namely, IFRAME and SRC. Here, one set of the blacklisted signatures belongs to the category with the IFRAME Type, and another set belongs to the category with the SCRIPT Type. Another set of the blacklisted signatures includes a combination of anomalies, such as signatures 702, 704, 706, and 708. It should be apparent to a person with ordinary skills in the art to recognize that each blacklisted signature can contain different combinations of object properties than the ones shown in FIG. 7.

As described above and in conjunction with FIG. 4 and FIG. 5, the signature based engine 404 extracts the objects 600, 602, and 604 of the source code of web page *W* as shown in FIG. 6 and compares these extracted objects to the known signature database 408 shown in FIG. 7. Here, the signature based engine 404 identifies a matching signature 700, because the object properties of the object 604 match the Type information of the matching signature 700 (i.e., IFRAME) and also the SRC information (i.e., www.foo.bar). However, suppose the web page *W* does not contain any object that matches any of the blacklisted signatures in the known signature database 408. Then, the heuristic engine 406 examines the objects and their associated object properties for anomalies and keeps track of an aggregated score for the web page *W.* As discussed above, if the aggregated score of the web page *W* exceeds a threshold, then the web page *W* is considered malicious and the location of currently processed web page or alternatively the anomaly or a combination of the anomalies contributing to the aggregated score is updated in the known signature database 408.

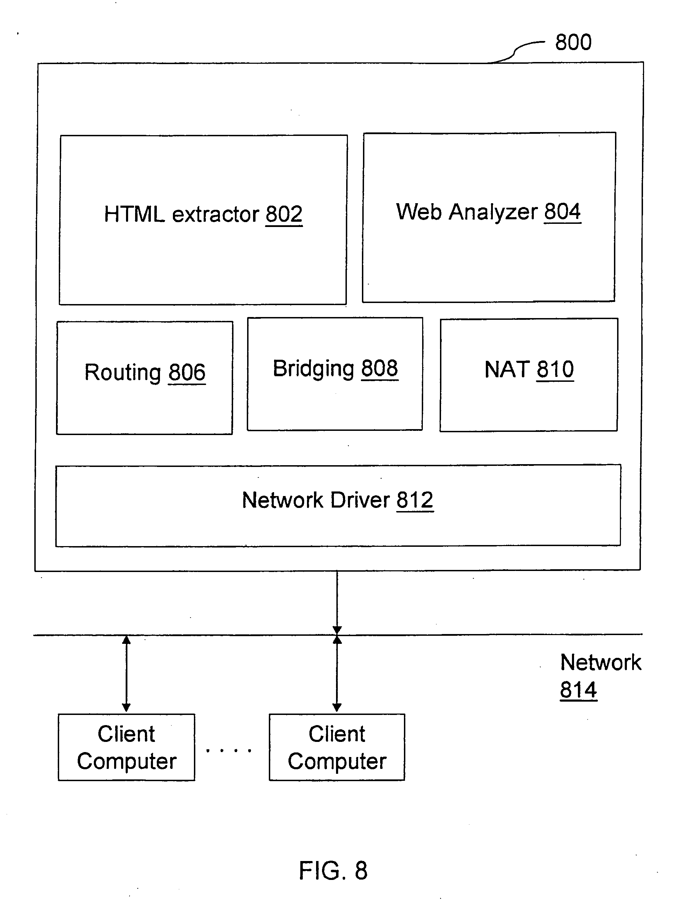

FIG. 8 is a simplified block diagram of a network device 800 with a web page analyzer 804, according to one embodiment of the present invention. The network device 800 includes a HTML extractor 802, the web page analyzer 804, a routing block 806, a bridging block 808, a NAT block 810, and a network driver 812. The HTML extractor 802 is responsible for extracting HTML documents from network protocols used by application users and network services and passing the extracted HTML documents to the web page analyzer 804. The web page analyzer 804 supports all the same functions as the web page analyzer 402 shown in FIG. 4 and detailed above. The network device 800 is configured to couple to a network 814 and also one or more client computers. Thus, all network traffic between the client computers and the network 814 travels through the network device 800.

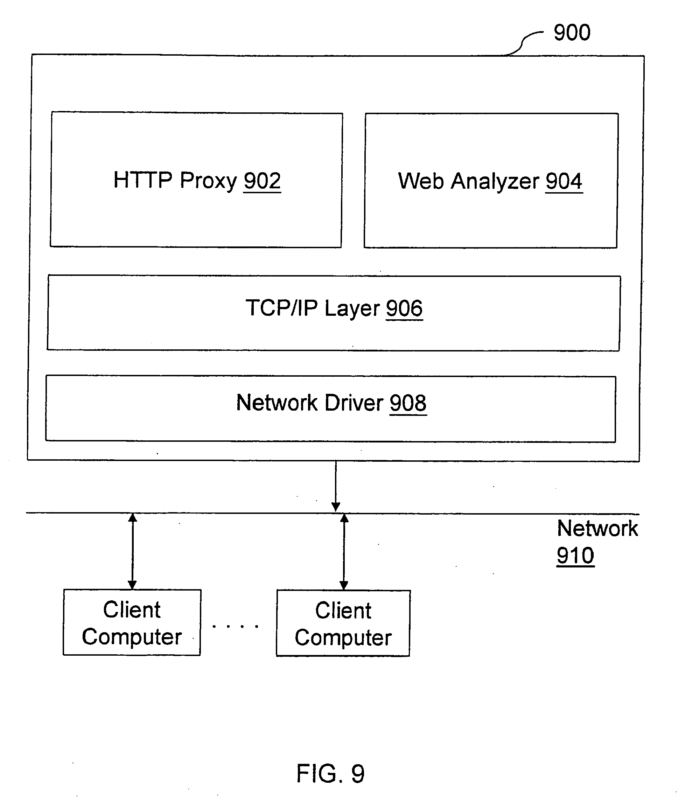

FIG. 9 is also a simplified block diagram of another network device 900 with a web page analyzer 904, according to another embodiment of the present invention. The network device 900 includes a HTTP proxy 902, the web page analyzer 904, a TCP/IP layer component 906, and a network driver 908. The HTTP proxy 902 handles HTTP requests and responses of the client computers on a network 910 by interacting with other servers on the network 910 and passes HTML documents to the web page analyzer 904. The web page analyzer 904 is the same as the web page analyzer 402 shown in FIG. 4. In addition, one implementation of the web page analyzer 904 also performs the function of filtering out certain blacklisted URLs. Similar to the network device 800, all network traffic between the client computers and the network 910 again travels through the network device 900. Alternatively, some of the network traffic, such as the HTTP traffic, is handled by the network device 900. In one implementation, all the illustrated blocks in both the network device 800 and the network device 900 are software components that are executed by one or more processing units in the network devices. Alternatively, some functions of these blocks, such as the functions supported by the web page analyzer 804 and the web page analyzer 904, are performed by one or more dedicated semiconductor devices.

The above description illustrates various embodiments of the present invention along with examples of how aspects of the present invention may be implemented. The above examples, embodiments, and drawings should not be deemed to be the only embodiments, and are presented to illustrate the flexibility and advantages of the present invention as defined by the following claims.

## Claims

1. A method for preventing web page attacks, the method comprises:
examining an object property from a web page requested by a client computer in real-time before the client computer receives the web page;
assessing a collective risk level associated with the web page causing harm to the client computer based on the result of examining the object property; and
performing an action with regards to the web page according to the collective risk level.

2. The method of claim 1, further comprising assigning a numerical score for each object property in the web page, wherein the numerical score is reflective of an individual risk level associated with the object property causing harm to the client computer.

3. The method of claim 2, wherein the examining step further comprises: identifying an unchecked object from the source code of the web page; and extracting the object property from the unchecked object.

4. The method of claim 3, wherein the assessing step further comprises comparing the object property of the unchecked object to a known signature database.

5. The method of claim 3, wherein the assessing step further comprises: establishing whether there is an anomaly associated with the web page; and determining whether the collective risk level associated with the anomaly exceeds a threshold.

6. The method of claim 5, wherein the determining step further comprises:
tracking the numerical score at each iteration of performing the assessing step;
comparing the numerical score to the threshold; and
updating a known signature database with the object property associated with the anomaly, if the numerical score exceeds the threshold.

7. The method of claim 5, wherein the determining step further comprises:
tracking the numerical score at each iteration of performing the assessing step;
comparing the numerical score to the threshold; and
updating a known signature database with a location of the web page, if the numerical score exceeds the threshold.

8. The method of claim 1, wherein the action includes reporting the result of assessing the collective risk level.

9. The method of claim 1, wherein the action includes initiating a process to clean the web page.

10. A network device configured to prevent web page attacks, the network device comprises:
a memory system, and
a processing unit, wherein the processing unit is configured to:
examine an object property from a web page requested by a client computer in real-time before the client computer receives the web page;
assess a collective risk level associated with the web page causing harm to the client computer based on the result of examining the object property; and
perform an action with regards to the web page according to the collective risk level.

11. The network device of claim 10, wherein the processing unit is further configured to assign a numerical score for each object property in the web page, wherein the numerical score is reflective of an individual risk level associated with the object property causing harm to the client computer.

12. The network device of claim 11, wherein the processing unit is further configured to:
identify an unchecked object from the source code of the web page; and
extract the object property from the unchecked object.

13. The network device of claim 12, wherein the processing unit is further configured to compare the object property of the unchecked object to a known signature database stored in the memory system.

14. The network device of claim 12, wherein the processing unit is further configured to compare the object property of the unchecked object to a known signature database maintained by a device external to the network device.

15. The network device of claim 12, wherein the processing unit is further configured to:
establish whether there is an anomaly associated with the web page; and
determine whether the collective risk level associated with the anomaly exceeds a threshold.

16. The network device of claim 15, wherein the processing unit is further configured to:
track the numerical score at each iteration of assessing the collective risk level;
compare the numerical score to the threshold; and
update a known signature database with the object property associated with the anomaly, if the numerical score exceeds the threshold.

17. The network device of claim 15, wherein the processing unit is further configured to:
track the numerical score at each iteration of performing the assessing step;
compare the numerical score to the threshold; and
update a known signature database with a location of the web page, if the numerical score exceeds the threshold.

18. The network device of claim 10, wherein the processing unit is further configured to report the result of assessing the collective risk level.

19. The network device of claim 10, wherein the processing unit is further configured to initiate a process to clean the web page.

20. A machine-readable medium containing a sequence of instructions for a web page analyzer, which when executed by a processing unit in a network device, causes the processing unit to:
examine an object property from a web page requested by a client computer in real-time before the client computer receives the web page;
assess a collective risk level associated with the web page causing harm to the client computer based on the result of examining the object property; and
perform an action with regards to the web page according to the collective risk level.

21. The machine-readable medium of claim 20, further containing a sequence of instructions for a heuristic engine, which when executed by the processing unit, causes the processing unit to assign a numerical score for each object property in the web page, wherein the numerical score is reflective of an individual risk level associated with the object property causing harm to the client computer.

22. The machine-readable medium of claim 21, further containing a sequence of instructions for a signature based engine, which when executed by the processing unit, causes the processing unit to:
identify an unchecked object from the source code of the web page; and
extract the object property from the unchecked object.

23. The machine-readable medium of claim 22, containing a sequence of instructions for the signature based engine, which when executed by the processing unit, causes the processing unit to compare the object property of the unchecked object to a known signature database.

24. The machine-readable medium of claim 22, containing a sequence of instructions for the heuristic engine, which when executed by the processing unit, causes the processing unit to:
establish whether there is an anomaly associated with the web page; and
determine whether the collective risk level associated with the anomaly exceeds a threshold.

25. The machine-readable medium of claim 24, containing a sequence of instructions for the heuristic engine, which when executed by the processing unit, causes the processing unit to:
track the numerical score at each iteration of performing the assessing step;
compare the numerical score to the threshold; and
update a known signature database with the object property associated with the anomaly, if the numerical score exceeds the threshold.

26. The machine-readable medium of claim 24, containing a sequence of instructions for the heuristic engine, which when executed by the processing unit, causes the processing unit to:
track the numerical score at each iteration of performing the assessing step;
compare the numerical score to the threshold; and
update a known signature database with a location of the web page, if the numerical score exceeds the threshold.

27. The machine-readable medium of claim 20, wherein the action includes reporting the result of assessing the collective risk level.

28. The machine-readable medium of claim 20, wherein the action includes initiating a process to clean the web page.

29. A processing unit for preventing web page attacks, the processing unit is configured to:
examine an object property from a web page requested by a client computer in real-time before the client computer receives the web page;
assess a collective risk level associated with the web page causing harm to the client computer based on the result of examining the object property; and
perform an action with regards to the web page according to the collective risk level.

30. The processing unit of claim 29, wherein the processing unit is further configured to assign a numerical score for each object property in the web page, wherein the numerical score is reflective of an individual risk level associated with the object property causing harm to the client computer.

31. The processing unit of claim 30, wherein the processing unit is further configured to:
identify an unchecked object from the source code of the web page; and
extract the object property from the unchecked object.

32. The processing unit of claim 31, wherein the processing unit is further configured to compare the object property of the unchecked object to a known signature database.

33. The processing unit of claim 31, wherein the processing unit is further configured to:
establish whether there is an anomaly associated with the web page; and
determine whether the collective risk level associated with the anomaly exceeds a threshold.

34. The processing unit of claim 33, wherein the processing unit is further configured to:
track the numerical score at each iteration of performing the assessing step;
compare the numerical score to the threshold; and
update a known signature database with the object property associated with the anomaly, if the numerical score exceeds the threshold.

35. The processing unit of claim 33, wherein the processing unit is further configured to:
track the numerical score at each iteration of performing the assessing step;
compare the numerical score to the threshold; and
update a known signature database with a location of the web page, if the numerical score exceeds the threshold.

36. The processing unit of claim 29, wherein the action includes reporting the result of assessing the collective risk level.

37. The processing unit of claim 29, wherein the action includes initiating a process to clean the web page.
